Europäisches Patentamt

European Patent Office

Office européen des brevets

(11) Publication number: **0 198 168**
A1

# EUROPEAN PATENT APPLICATION

(21) Application number: 86101809.1

(22) Date of filing: 13.02.86

(51) Int. Cl.⁴: **G 02 F 1/133**, G 09 F 9/35, G 09 G 3/36

(30) Priority: 21.02.85 US 704034

(43) Date of publication of application: 22.10.86 Bulletin 86/43

(84) Designated Contracting States: DE FR GB IT NL SE

(71) Applicant: Ovonic Display Systems, Inc., 1896 Barrett Street, Troy Michigan 48084 (US)

(72) Inventor: Zvi, Yaniv, 27610 Arlington Court, Southfield Michigan 48076 (US)
Inventor: Cannella, Vincent D., 18625 Devonshire, Birmingham Michigan 48009 (US)

(74) Representative: Müller, Hans-Jürgen, Dipl.-Ing. et al, Müller, Schupfner & Gauger Lucile-Grahn-Strasse 38 Postfach 80 13 69, D-8000 München 80 (DE)

(54) Active matrix liquid crystal displays and method of making them.

(57) Active matrix, liquid crystal displays utilize as the liquid crystal medium, a substantially solid phase material (28) having liquid crystal material (30) dispersed therein. The display includes a plurality of pixels (10), at least one pixel including a pair of electrodes (14, 32). At least one electrode is light transmissive. Isolation means (18, 20) are coupled to one electrode to enable the selective application of driving potentials across the electrodes, and the substantially solid phase material (28) having light influencing material (30) dispersed therein is disposed between the electrodes (14, 32). Also disclosed is a method of making the displays.

EP 0 198 168 A1

Telefon: (0 89) 4 70 60 55/56
Telex: 5 23016
Telegramm / cable:
Zetapatent® München

Postfach 80 13 69
Lucile-Grahn-Straße 38
D-8000 München 80

Hans-Jürgen Müller
Gerhard D. Schupfner
Hans-Peter Gauger
Patentanwälte
European Patent Attorneys
Mandataires en brevets européens

0198168

## IMPROVED ACTIVE MATRIX LIQUID CRYSTAL
## DISPLAYS AND METHOD OF MAKING SAME

The present invention generally relates to light influencing displays and more particularly to active matrix liquid crystal displays wherein the liquid crystal material of the display is dispersed in a substantially solid phase medium.

Liquid crystal displays are well known in the prior art. One common form of display includes a plurality of pixels having twisted nematic liquid crystal material disposed between a pair of light transmissive pixel electrodes which are carried by a corresponding pair of glass sheets. Formed on the electrodes are properly treated alignment layers which promote alignment of the liquid crystal molecules near the opposing surfaces of the liquid crystal material such that the major axes of the molecules are parallel to one another. When twisted nematic liquid crystal material is employed, the axes of the liquid crystal molecules adjacent one electrode are rotated by a quarter turn or 90 degrees relative to the axes of the molecules adjacent the other electrode giving the nematic liquid crystal molecules a continuously changing orientation giving the molecules helical or twisted displacement. The display also includes a pair of polarizers respectively on opposite sides of the glass sheets.

Depending on the relative alignment of the axes of the polarizers to each other and the display, when the liquid crystal material is in an unenergized state, transmission or absorption of incident light can occur. Upon the application of an electric field across the electrodes, the liquid crystal molecules are rotated into alignment with each other reversing the light transmission state of the display.

The pixels of such displays are generally arranged into M rows and N columns defining a matrix array. Each pixel is addressed using conventional "X-Y" addressing techniques which employ M + N address lines. Thus, each pixel possesses a unique X-Y location in the matrix which may be addressed by applying suitable voltages to a corresponding combination of X and Y addressing lines.

The magnitude of the voltage at which a liquid crystal pixel is switched to a different optical state is generally referred to as the threshold voltage of the liquid crystal material. In the case of large matrix arrays having many pixels, a significant level of electrical cross talk can exist in the addressing circuitry between adjacent pixels. In cases where the voltage threshold is not sufficiently sharp, the cross talk can be sufficient in some cases to energize pixels which are not intended to be addressed. As a result, active matrices have been developed to provide means for isolating each pixel to some degree from circuit cross talk for improving the electrical isolation between adjacent pixels. Such active matrices include nonlinear threshold devices such as diodes or switching devices such as transistors in series with each pixel to enhance the sharpness of the effective threshold of the liquid crystal materials.

-3-

While displays of the prior art have found commercial acceptance and applicability, they do suffer from some disadvantages. For example, spacers between the glass sheets of the displays are necessary to accurately control the thickness of the liquid crystal material disposed therebetween. Such spacers are difficult to handle and incorporate into the displays during the manufacture thereof. Also, adequate sealing of the periphery of the glass sheets is required to preclude the loss of the liquid crystal material.

With respect to the physical properties of the displays, because glass sheets are used therein, the displays are relatively fragile. Also, because glass is a rigid material, the displays are subject to breakage due to possible flexing during installation into their final environment.

With respect to the operation of the displays, one or more polarizers must be employed with the pixels. These polarizers represent a considerable portion of both the component cost and labor cost of the display.

The invention provides an active matrix, light influencing display having a plurality of pixels. At least one pixel includes a pair of electrodes, at least one of the electrodes being light transmissive, isolation means coupled to one of the electrodes to enable the selective application of driving potentials across the electrodes, and a layer of substantially solid phase material disposed between the electrodes. The substantially solid phase material has light influencing material dispersed therein. The light influencing

-4-

material is preferably liquid crystal material and can be nematic liquid crystal material, for example.

The substantially solid phase material is preferably light transmissive and can include a dye for enabling the material to transmit light of a selected wavelength.

In accordance with one aspect of the invention, the light influencing material is liquid crystal material.

The invention further provides a method of making a pixel for an active matrix, light influencing display. The method includes the steps of providing an insulative substrate, forming a first pixel electrode on the substrate, forming at least one isolation device in electrical connection to the first electrode, forming a layer of substantially solid phase material having light influencing material dispersed therein over at least the first electrode, and forming a second pixel electrode on the layer of substantially solid phase material.

The preferred embodiment of this invention will now be described by way of example, with reference to the drawings accompanying this specification in which:

Accordingly, a first object of the invention is to provide an active matrix, light influencing display including a plurality of pixels, at least one pixel including a pair of electrodes, at least one of the electrodes being light transmissive, and isolation means coupled to one of the electrodes to enable the selective application of

-5-

driving potentials across the electrodes, characterized by: a layer of substantially solid phase material disposed between the electrodes, the substantially solid phase material having light influencing material dispersed therein.

A second object of the invention is to provide a method of making a pixel for an active matrix, light influencing display including the steps of providing an insulative substrate, forming a first pixel electrode on said substrate, forming at least one isolation device in electrical connection to said first electrode, characterized by: forming a layer of substantially solid phase material having light influencing material dispersed therein over at least the first electrode, and forming a second pixel electrode on the layer of substantially solid phase material.

Figure 1 is a partial cross-sectional side view of a liquid crystal display embodying the present invention;

Figure 2 is a partial top plan view of the display of Figure 1 at an intermediate stage of the assembly thereof;

Figure 3 is an equivalent circuit diagram of the structure illustrated in Figure 1;

Figure 4 is a partial cross-sectional side view of another liquid crystal display embodying the present invention;

Figure 5 is a partial top plan view of the display of Figure 4 at an intermediate stage of the assembly thereof; and

Figure 6 is an equivalent circuit diagram of the structure illustrated in Figure 4.

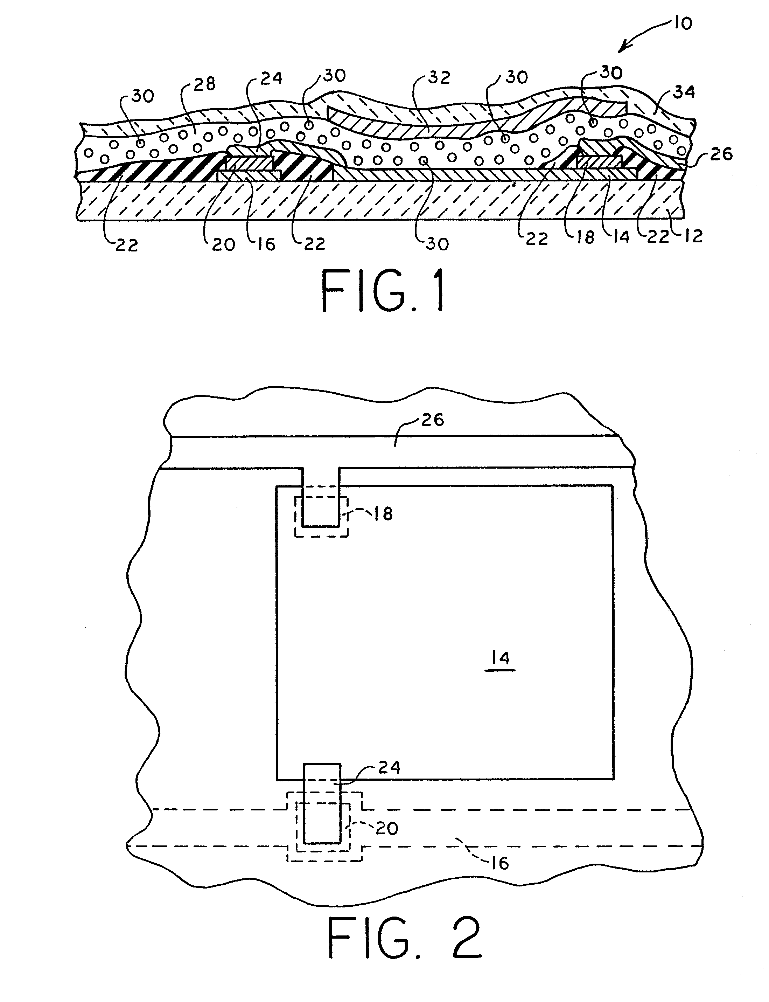

Referring now to Figures 1 and 2, Figure 1 illustrates a display pixel 10 of a liquid crystal display embodying the present invention and Figure 2 illustrates the display of Figure 1 at an intermediate stage of its manufacture. Although just one pixel 10 is illustrated, it can be appreciated that many such pixels can be formed in, for example, a row and column arrangement to provide a complete display. It will be understood that none of the figures are drawn to scale. It will also be understood the proportionate size of some of the electronic structures may be enlarged for clarity.

The pixel 10 includes an insulative substrate 12 which can be formed from glass, for example or preferably a flexible insulating material such as Kapton. Formed on the substrate 12 is a first electrode 14 and a first address lead 16. The electrode 14 and address lead 16 can be formed from a conductive opaque material such as metal, for example, aluminum, molybdenum, or a molybdenum tantalum alloy or a conductive transparent material such as indium tin oxide, for example. Other suitable metals are chromium, tantalum tungsten, palladium and platinum. The electrode 14 and address lead 16 are formed by, for example, S-gun magnetron sputtering the metal over the entire surface area of the substrate 12 and then removing selected portions of the deposited metal by utilizing a mask and photolithography techniques of the type well known in the art.

The pixel 10 further includes a pair of diodes 18 and 20 formed on the electrode 14 and address lead 16, respectively. The diodes 18 and 20 are preferably formed from a deposited semiconductor material. The deposited semiconductor material is preferably an amorphous semiconductor alloy including silicon. The amorphous silicon alloy can also include hydrogen and/or fluorine and can be deposited by plasma assisted chemical vapor deposition i.e. glow discharge as disclosed, for example, in U.S. Patent No. 4,226,898 which issued on October 7, 1980 in the names of Stanford R. Ovshinsky and Arun Madan for Amorphous Semiconductors Equivalent To Crystalline Semiconductors Produced By A Glow Discharge Process, which is hereby incorporated herein by reference. The diodes 18 and 20 preferably have a p-i-n configuration formed by a first doped region, which can be p-type, an intrinsic region overlying the first doped regions, and a second doped region, which can be n-type, overlying the intrinsic regions. Such diodes and liquid crystal displays utilizing the same are fully described in copending U.S. Application Serial No. 675,941, filed December 3, 1984 for Liquid Crystal Displays Operated by Amorphous Silicon Alloy Diodes, which application is incorporated herein by reference.

The diodes 18 and 20 can be formed more specifically by depositing the previously mentioned amorphous silicon alloy regions over the entire surface area of the substrate 12, electrode 14 and address lead 16 and thereafter selectively etching portions of the amorphous silicon alloy regions by utilizing a suitable mask and conventional photolithography techniques. The mask utilized during the etching process preferably defines a diode configuration wherein each diode is about 10 to 50 microns on a side. Representative thicknesses for the amorphous silicon alloy regions can be, for example, 300 to 1,000 Angstroms and preferably 500 Angstroms for the p-type regions, 1,000 to 10,000 Angstroms and preferably 5,000 Angstroms for the intrinsic regions, and 100 to 500 Angstroms and preferably 200 Angstroms for the n-type regions.

Formed over the substrate 12, and in between the diodes 18 and 20, and the electrode 14 as shown, is a layer of insulating material 22. The insulating material 22 can be formed from any deposited insulator such as silicon oxide ($Si_xO_y$) or silicon nitride ($Si_xN_y$), or a polyimide, for example. The configuration of the layer 22 can be obtained by roller, extrusion, or spin coating the polyimide, for example, over the entire surface area, spin coating a layer of photoresist over the polyimide layer, and then exposing and developing out both of the photoresist and the polyimide using a further mask. This step uncovers upper surface portions of the diodes 18 and 20, as well as an upper surface portion of the electrode 14.

The pixel 10 further includes a second address lead 26 in electrical contact with the diode 18 and an interconnect lead 24 which connects the electrode 14 to the diode 20. The interconnect lead 24 and the second address lead 26 can be formed from any of the metals previously referred to with respect to the first electrode 14 and first address lead 16 by sputtering the metal over the entire surface area of the partially completed display matrix and then configuring the same by utilizing a suitable mask and conventional photolithography techniques.

The address leads 16 and 26 are formed out of deposited metal essentially parallel to one another. Forming the address leads 16 and 26 so that they do not cross is advantageous from a manufacturing perspective. When address lines cross, a layer of insulator, such as silicon dioxide, must be positioned therebetween so as to isolate one address line from the other. Such insulators at times are formed with pinhole defects that result in the two address lines coming into electrical contact with one another. Elimination of these crossovers reduces the possibility of such defects. Additionally, elimination of these crossovers simplifies the overall structure of the display.

Speed of addressing is also enhanced by elimination of crossovers. Each crossover forms a capacitor with the insulator forming a dielectric between the adjacent regions of the respective address lines. Since a given array could have a plurality of crossover points, a substantial reduction in capacitance can result.

It must be appreciated that the structures illustrated in Figures 1 and 2 are not drawn to scale and that the electrode 14 defines the display area of the pixel 10. The electrode 14 can be configured in a square configuration as illustrated in Figure 2 and can be, for example, 100 to 2,000 microns on a side depending on the overall size of the finished display matrix and the desired aspect ratio.

Overlying the resulting structure described above and illustrated in Figure 2, is a layer 28 of substantially solid phase material having light influencing material 30 dispersed therein. By the term "light influencing material" is meant any material which emits light or can be used to selectively vary the intensity, phase, or polarization of light either being reflected from or transmitted through the material. Liquid crystal material is only one such material. The light influencing material 30 can be of any conventional variety, as for example, nematic liquid crystal display material.

The substantially solid phase material 28 is preferably a polymer or gelatin material which is transparent or semitransparent to light. The liquid crystal material 30, which can be nematic liquid crystal material, when dispersed therein takes form of a multiplicity of small liquid crystal spheres. In the absence of applied energy, the liquid crystal molecules will orientate themselves with respect to the inner spherical walls in which the material is contained such that the major axes of the liquid crystal molecules will be non-parallel. Hence, the liquid crystal material will be non-isotropic and scatter or reflect incident light. As a result, the substantially solid phase material 28 with the liquid crystal material 30 dispersed therein will appear light in color in a reflective mode, for example white, and opaque or dark in a transmissive mode. When energy is applied however, such as by the application of an electric field as utilized in the display of Figure 1, the liquid crystal molecules will orientate themselves with their major axes parallel to the applied field. Hence, the liquid crystal material will be isotropic and will not scatter or reflect incident light. As a result, the substantially solid phase material 28 with the liquid crystal material dispersed therein will become transparent. In the reflective mode, the reflection or absorption of the underlying layer will appear. In the transmissive mode, incident light will be transmitted through the display.

The layer 28 of substantially solid phase material dispersed with liquid crystal material 30 can be prepared and applied to the structure of Figure 2 in the following manner. First, a mixture is prepared containing 3 grams of 45% HI pure liquid gelatin in water, 1 gram of E-7 liquid crystal, and 0.2 gram of ammonium dichromate in 1 milliliter of water. HI pure liquid gelatin is available from Norland Products Inc. of New Brunswick, New Jersey and E-7 liquid crystal is available from BDH Chemicals Ltd. of Poole, England. The mixture is thoroughly mixed for three hours at room temperature. The mixture is then coated over the partially completed matrix display of Figure 2, allowed to stand 30 minutes at room temperature, and then is heated to 80° centigrade for 5 minutes. This results in a film of material which is then exposed to ultraviolet light for 30 to 120 seconds. If it is desired to pattern the layer 28, the film can be masked during exposure. The unmasked portions become insoluble in water and the masked portions can be washed away with water.

As illustrated in Figure 1, the layer 28 is not patterned but instead overlies the entire surface area of the partially completed matrix display. It is however necessary, of course, that the layer overlie at least the area of the electrode 14.

The pixel 10 is completed with a second electrode 32 formed of transparent conductive material which can be, for example, indium tin oxide and a transparent protective layer 34 which can be a transparent polyimide. The indium tin oxide electrode is in contact with the solid phase material 28. It is configured to have the same dimension as the electrode 14 and is aligned therewith.

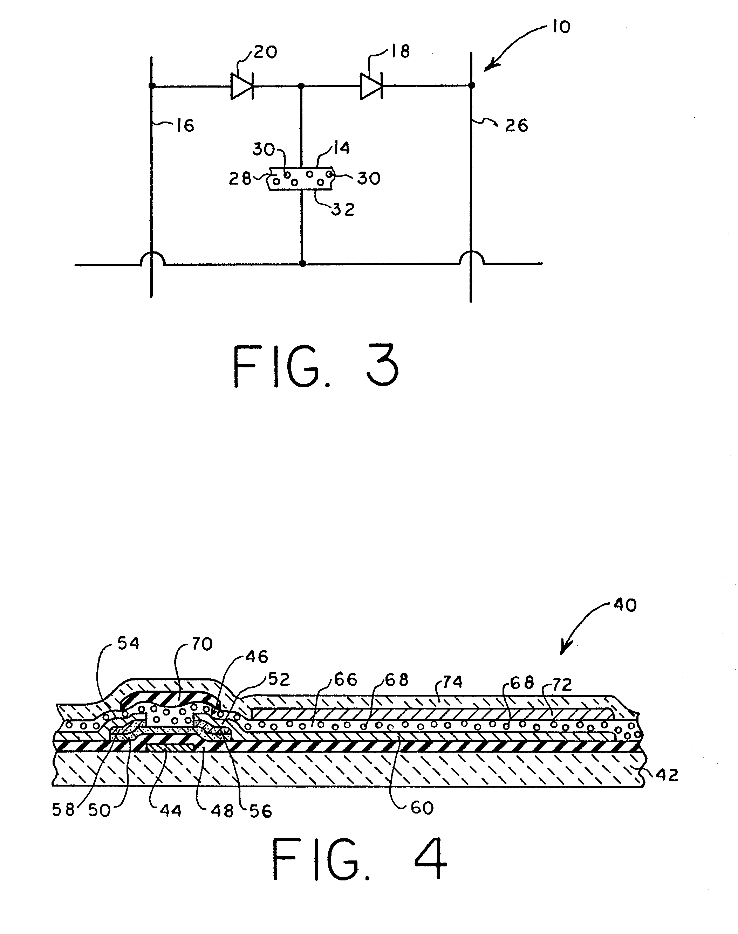

Referring now to Figure 3, it illustrates the equivalent circuit diagram of the pixel 10 of Figure 1. As can be noted from Figure 3, the pixel includes the address leads 16 and 26, a pair of series connected diodes 18 and 20 coupled between the address leads 16 and 26, and the first conductive electrode 14 coupled between the diodes. The pixel 10 further includes the second electrode 32 spaced from the first electrode 14. In between the electrodes 14 and 32 is the solid phase material 28 having liquid crystal material 30 dispersed therein.

As is well known, the useful life of a nematic liquid crystal display can be extended if the polarity of the applied voltage potential is reversed during alternate frames. This can be ac-

-13-

complished with the pixel 10 of Figure 1 by impressing a positive potential onto address lead 16 and a negative potential onto electrode 32 during one frame to forward bias diode 20 and by impressing a negative potential onto address lead 26 and a positive potential on the electrode 14 during the next frame. Repeating this sequence causes the potential applied to the liquid crystal display material to be reversed during alternate frames.

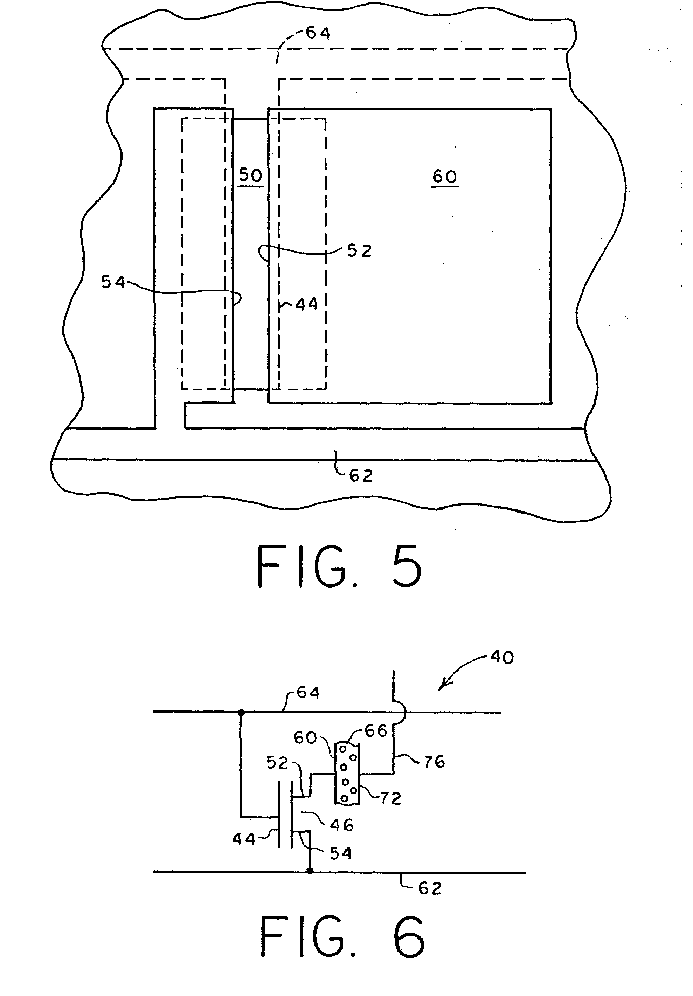

Referring now to Figure 4, it illustrates another liquid crystal display pixel 40 structured in accordance with another embodiment of the present invention. The pixel 40, as will be appreciated hereinafter, includes a thin film field effect transistor to provide isolation between adjacent pixels. Figure 5 illustrates the pixel 10 at a partially completed stage of the manufacture thereof prior to the application thereto of the solid phase material having the liquid crystal material dispersed therein.

Referring now to Figures 4 and 5, the pixel 40 includes a substrate 42 which again can be glass or preferably a flexible sheet of insulator such as Kapton. Formed on the substrate 42 is a gate electrode 44. The gate 44 is the gate of the field effect transistor 46 and can be formed from aluminum or chromium, for example. Deposited over the entire surface area is an insulator 48. The insulator 48 forms the gate insulator of the field effect transistor 46 and can be, for example, silicon oxide ($Si_xO_y$). Formed over the insulator 38 in the region of the gate electrode 44 is a layer 50 of a deposited semiconductor. The deposited semiconductor can be an amorphous silicon alloy as previously described and can also include germanium. The semiconductor layer 50 can be deposited in a manner as fully disclosed in the aforementioned referenced U.S. Patent No. 4,226,898.

Formed over the semiconductor layer 50 and to complete the field effect transistor 46 are spaced apart drain and source electrodes 52 and 54 respectively. The drain 52 and source 54 can be formed from a metal such as chromium. To provide a good ohmic contact between the semiconductor 50 and the drain and source electrodes 52 and 54, there are thin layers 56 and 58 of n+ semiconductor material disposed between these electrodes and the semiconductor.

As can be noted best in Figure 5, for a display which is to operate in the reflective mode, the metal forming the drain 52 can extend therefrom as shown to form a first electrode 60 of the pixel. For a display which is to operate in the transmissive mode, the electrode 60 can be formed from a transparent conductive material such as indium tin oxide, for example. The metal forming the source 54 also extends therefrom to form a first address lead 62. A second address lead 64 extends from the gate 44 and is also formed integral therewith.

Applied over the structure described above and shown in Figure 5 is a layer 66 of substantially solid phase material having liquid crystal material 68 dispersed therein. The layer 66 can be prepared as previously described.

To shield the field effect transistor semiconductor 50 from incident light, a shield 70 is applied over the layer 66 in the region of the transistor 46. The shield can be combined layers of an insulator, such as silicon oxide ($Si_xO_y$) and then a metal, a polymer layer and then a metal, or a single layer of an opaque insulating polymer.

Also applied over the layer 66 is a transparent or semitransparent conductive second electrode 72. The electrode 72 has the same shape and configuration as the first electrode 60 and is aligned therewith.

To complete the pixel, a transparent insulator 74 is coated over the entire structure. The transparent insulator can be a transparent polymer, for example.

Figure 6 illustrates the equivalent circuit diagram of the pixel 40. As can be noted, the pixel includes a field effect transistor 46 having a gate 44 coupled to an address lead 64, a source 54 coupled to an address lead 62 and a drain 52 coupled to the first electrode 60. The pixel further includes the second electrode 72 coupled to a third address lead 76 (not shown in Figures 4 and 5) which extends therefrom on the layer 66. Between the electrodes 60 and 72 is the substantially solid phase material 66 having liquid crystal material 68 dispersed therein.

In practicing the present invention, the thickness of the solid phase material can be selected to control the threshold voltage of the

-16-

liquid crystal material. For most low threshold voltage liquid crystal materials, the threshold voltage will be between 0.3 to 0.5 volts for each micron of layer thickness. Also, it is preferred that the index of refraction of the liquid crystal material when in the isotropic mode substantially match the index of refraction of the solid phase material in which it is dispersed.

The present invention provides a new and improved active matrix, light influencing display. Because the liquid crystal material is dispersed in a substantially solid phase medium, no spacers are required to control the liquid crystal thickness, nor is sealing the liquid crystal at the display periphery required. Further, flexible substrates can be used because the solid phase material renders structural integrity to the display. Hence, the displays can be flexed without breakage. Glass sheets can be avoided rendering the displays much less fragile and more rugged. Also, since the liquid crystal material is non-isotropic in its nonenergized condition and isotropic when energized, polarizers are not required to obtain proper operation of the displays.

-17-

## CLAIMS

1. An active matrix, light influencing display comprising a plurality of pixels, at least one said pixel including a pair of electrodes, at least one of said electrodes being light transmissive, and isolation means coupled to one of said electrodes to enable the selective application of driving potentials across said electrodes, characterized by: a layer (28) of substantially solid phase material disposed between said electrodes, said substantially solid phase material having light influencing material (30) dispersed therein.

2. A display according to claim 1 further characterized by said substantially solid phase material (28) being light transmissive.

3. A display according to any one of claims 1 or 2 further characterized by said substantially solid phase material (28) including a polymer material.

4. A display according to any one of claims 1 through 3 further characterized by said light influencing material being liquid crystal material.

5. A display according to any one of claims 1 through 4 further characterized by said isolation means including a deposited semiconductor material.

6. A display according to claim 5 further characterized by said deposited semiconductor material being an amorphous semiconductor alloy.

7.    A display according to claim 6 further characterized by said amorphous semiconductor alloy including silicon.

8.    A display according to claim 6 further characterized by said amorphous semiconductor alloy including hydrogen.

9.    A display according to claim 6 further characterized by said amorphous semiconductor alloy including fluorine.

10.    A display according to any one of claims 1 through 9 further characterized by said isolation device comprises a field effect transistor.

11.    A display according to any one of claims 1 through 9 further characterized by said isolation means including at least one diode.

12.    A method of making a pixel for an active matrix, light influencing display including the steps of providing an insulative substrate, forming a first pixel electrode on said substrate, forming at least one isolation device in electrical connection to said first electrode characterized by:    forming a layer of substantially solid phase material having light influencing material dispersed therein over at least said first electrode, and forming a second pixel electrode on said layer of substantially solid phase material.

13.    A method according to claim 12 further characterized by said substantially solid phase material being a light transmissive material.

14.    A method according to any one of claims 12 or 13 further characterized by said substantially solid phase material being a polymer material.

15. A method according to any one of claims 12 through 15 further characterized by said light influencing material being liquid crystal material.

16. A method according to any one of claims 12 through 16 further characterized by said second pixel electrode being formed from a transparent electrically conductive material.

17. A method according to claim 16 further characterized by said transparent electrically conductive material including indium tin oxide.

18. A method according to any one of claims 12 through 17 further characterized by said isolation device being formed by depositing at least one semiconductor material.

19. A method according to claim 18 further characterized by said deposited semiconductor material being an amorphous semiconductor alloy.

20. A method according to any one of claims 12 through 19 further characterized by said isolation device being formed by forming a field effect transistor.

21. A method according to any one of claims 12 through 18 further characterized by said isolation device being formed by forming at least one diode.

FIG. 1

FIG. 2

0198168

FIG. 3

FIG. 4

FIG. 5

FIG. 6

**European Patent Office**

## EUROPEAN SEARCH REPORT

| | DOCUMENTS CONSIDERED TO BE RELEVANT | | EP 86101809.1 |
|---|---|---|---|

| Category | Citation of document with indication, where appropriate, of relevant passages | Relevant to claim | CLASSIFICATION OF THE APPLICATION (Int. Cl.4) |
|---|---|---|---|
| Y | US - A - 4 435 047 (FERGASON)<br>* Column 3, line 17 - column 5, line 61; column 8, line 6 - column 10, line 47; column 16, lines 9-19 *<br>-- | 1-21 | G 02 F 1/133<br><br>G 09 F 9/35<br><br>G 09 G 3/36 |
| Y,P | EP - A2 - 0 150 728 (ENERGY CON-VERSION)<br>* Fig. 1-3; claims *<br>-- | 1-9,11-19,21 | |
| Y,P | EP - A2 - 0 136 509 (KABUSHIKI)<br>* Claims; fig. 5,6; page 3, lines 14-23 *<br>-- | 1-8,10,12-20 | |
| Y | US - A - 4 223 308 (BARAFF)<br>* Fig. 2; column 2, line 51 - column 3, line 68; column 5, lines 5-12 *<br>-- | 1-8,11,12-16,18,19,21 | TECHNICAL FIELDS SEARCHED (Int. Cl.4) |
| Y | US - A - 4 448 491 (OKUBO)<br>* Fig. 3A,B; claims 1,6,9,10; column 21, lines 5-13 *<br>-- | 1-6,10,12-20 | G 02 F 1/00<br><br>G 09 F 9/00<br><br>G 09 G 3/00 |
| A | EP - A2 - 0 121 415 (MANCHESTER)<br>* Fig. 22; page 44, line 17 - page 47, line 15 *<br>---- | 1-4 | |

The present search report has been drawn up for all claims

| Place of search | Date of completion of the search | Examiner |
|---|---|---|
| VIENNA | 23-05-1986 | GRONAU |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82